**Europäisches Patentamt**

**European Patent Office**

**Office européen des brevets**

(19)

(11) Publication number:

**0 230 457**
**B1**

# EUROPEAN PATENT SPECIFICATION

(12)

(45) Date of publication of patent specification: **27.12.90**

(21) Application number: **86904669.8**

(22) Date of filing: **09.07.86**

(86) International application number:
**PCT/US86/01469**

(87) International publication number:
**WO 87/00147 15.01.87 Gazette 87/01**

(51) Int. Cl.⁵: **B 65 D 35/10, B 29 C 41/44,**
**F 16 L 11/00, F 16 L 11/10**

(54) **COMPOSITE FUEL AND VAPOR TUBE.**

(30) Priority: **10.07.85 US 753743**

(43) Date of publication of application:
**05.08.87 Bulletin 87/32**

(45) Publication of the grant of the patent:
**27.12.90 Bulletin 90/52**

(84) Designated Contracting States:
**AT BE CH DE FR GB IT LI LU NL SE**

(56) References cited:
**EP-A-0 051 139**
**FR-A-1 394 036**
**FR-A-2 486 471**
**US-A-4 276 908**
**US-A-4 384 595**
**US-A-4 448 829**

(73) Proprietor: **Handy & Harman Automotive Group Inc.**
**400 South Tuscarawas Avenue**
**Dover Ohio 44622 (US)**

(72) Inventor: **CAMPBELL, Larry, J.**
**450 North Eden Drive**
**Bolivar, OH 44612 (US)**
Inventor: **CONCAUGH, Joseph, M.**
**5948 Shakertown Drive, N.W., Apt. M-5**
**Canton, OH 44718 (US)**

(74) Representative: **Jones, Andrée Zena**
**CRUIKSHANK & FAIRWEATHER 19 Royal**
**Exchange Square**
**Glasgow, G1 3AE Scotland (GB)**

Courier Press, Leamington Spa, England.

EP 0 230 457 B1

## Description

### Background

The present invention relates to the field of tubing manufacture and in particular to the field of automotive fuel and vapor transmission tubes.

Presently manufactured fuel lines for automobiles are usually thick walled tubes made of nylon 11 or 12. The wall thickness is approximately forty-thousandths of an inch, however only one- to two-thousandths are actually necessary to contain the fuel. The remainder of the thickness is necessary to protect the inner thickness and support it.

In order to properly route the fuel line, turns and bends must be thermally preformed into the thick tube. Thus formed, the tube is often difficult to "fish" through the vehicle from the fuel tank to the carburetor or fuel pump during assembly in the vehicle.

In the same manner, vapor tubes for recycling the fuel vapors in an automobile pollution control device must be resistant to the fuel as well. The tubing used must be made of a resistant material which, as with fuel lines, must be fished through the vehicle for assembly.

In many applications plastic tubing cannot prudently be used because of the work environment. Plastic tubing in the area of a welding operation is subject to rupture by weld splatter which may melt the tube wall. This occurrence could have disastrous effects if the tube is carrying a flamable substance such as fuel.

There are flexible hose assemblies for fuel lines shown in the prior art. U.S. Patent No. 2,787,289 to Press discloses such a flexible line. The line disclosed in this patent is made up of an extruded polytetrafluoroethylene tube which is surrounded by one or more layers of reinforcing wire braid of stainless steel and covered by a flexible tubular cover which is made of asbestos impregnated with a substantially oil proof material. This type of line although flexible, is also resilient and therefore does not maintain the shape it is bent into. This is undesirable in many automotive applications as at least some type of semi-rigidity or shape holding is necessary to hold the line in the proper position.

In U.S. Patent 4,327,248 to Campbell, there is disclosed a shielded electrical cable. The shield is made of a flexible metal liner made from metal tape with a coating of a copolymer of ethylene with a monomer having a reactive carboxyl group bonded to at least one of its sides. An adhesive is used to bond the coating to a flexible or semirigid outer covering of a non-olefinic polymeric material. This cable is also disclosed in Campbell's corresponding European Patent Specification No. 0051139.

The present invention provides a bendable tubular article for transport of fuels such as gasoline, diesel fuel, methanol, ethanol, sour gas and the like comprising: a bendable metal strip-formed sleeve extending throughout the length of the article and having an adhesive layer on the outer surface of said metal sleeve; and a flexible plastic jacket encasing said metal sleeve and adhered thereto by said adhesive layer, characterized in that said article includes an innermost flexible, bendable tubular liner made of petroleum resistant material, and that the bendable metal sleeve has sufficient strength to dominate over resiliency of the plastic jacket to form a bendable tubular composite article capable of maintaining a desired configuration, said metal sleeve having sufficient heat dissipation capabilities to rapidly dissipate heat axially along the sleeve to prevent localized overheating of the article due to exposure to heat or sparks, and further characterized in that the flexible plastic jacket provides improved kink resistance and the self-maintaining configuration characteristic of said composite is greater than the flexibility of said liner so that the article retains its shape after bending.

When the composite wall of the invention is used, the plastic casing or jacket surrounds a thin metallic layer such as aluminum which in turn surrounds the thin petroleum resistant liner giving it a bendable quality without buckling. The metallic layer offers sufficient strength to dominate over the resiliency of the plastic layer when the tubing is bent to a desired configuration. The tube thus has the above mentioned characteristic and maintains the configuration it is formed into.

The presence of the plastic/metal covering over the actual conduit inner tube offers sufficient mechanical protection to safely allow a much smaller wall thickness of the inner liner. The inner liner is normally made of an expensive substance and therefor reducing the wall thickness results in significant savings.

A tightly formed plastic/metal covering also offers an encapsulation effect over the outside of the inner tube which minimizes kinking. Optionally the inner tube may be supplied with longitudinal ribs to further reinforce the tube against kinks. These features enhance the mechanical characteristics of the inner tube as, for example, by providing enhanced burst strength.

The metal layer also provides several significant characteristics to the tube assembly. First, the metal layer provides protection against tube rupture caused by torch sparks or weld splatter commonly encountered in muffler or body repair shops. The layer offers a metal barrier to the spark or splatter while providing a tremendous heat sink, through its heat capacity and good thermal conductivity, to dissipate the heat. Second, because all plastics have some degree of moisture permeability, the metallic layer provides a significantly reduced moisture vapor transmission rate as compared to a 100% plastic tube. Third, the metal layer also overcomes resiliency of the outer covering to permit bending into self-sustaining contour or shape.

## Brief Description of the Drawing

Fig. 1 is a partially cut-away perspective view of the fuel or vapor tube of the invention.

Fig. 2 is a cross-sectional view of an embodiment of the invention having internal ribs.

## Description of the Preferred Embodiment

The fuel or vapor tube includes an inner liner 1 made of a fuel resistant material, such as but not limited to nylon 12, and is approximately 0.1mm - 0.5mm (four to twenty mils) thick.

The liner 1 is cylindrical in shape. Longitudinally wrapped about the longitudinal axis of the liner is an aluminum strip 2 which forms a longitudinally extending lap joint 4. The aluminum strip 2 is approximately 0.3mm (twelve mils) thick. Encasing the strip-formed sleeve 2 is a plastic casing 5. The strip is coated on both sides with an adhesive 3 which bonds to the plastic casing. More particularly, the adhesive is made from a copolymer of ethylene and a monomer having a reactive carboxyl group such as acrylic acid or an acrylic acid ester. An example of such a coated aluminum strip is currently manufactured under the "Zetabon" trademark by Dow Chemical Company. It is understood that the layer 2 may be made of any sufficiently bendable metal which has the characteristic of staying in bent shape, however, aluminum is preferred. Alternatively, the aluminum strip may be coated with adhesive 3 on one side only which would provide sufficient adhesion between the laps of the joint 4. A two-sided coating is preferred, however, as it creates an adhesive to adhesive bond in the lap joint 4.

The casing is extruded onto the aluminum strip 2 after the strip is wrapped around the liner. It is made of a plastic, such as polyethylene, chlorinated polyethylene if flame retardation is desired, or other plastics.

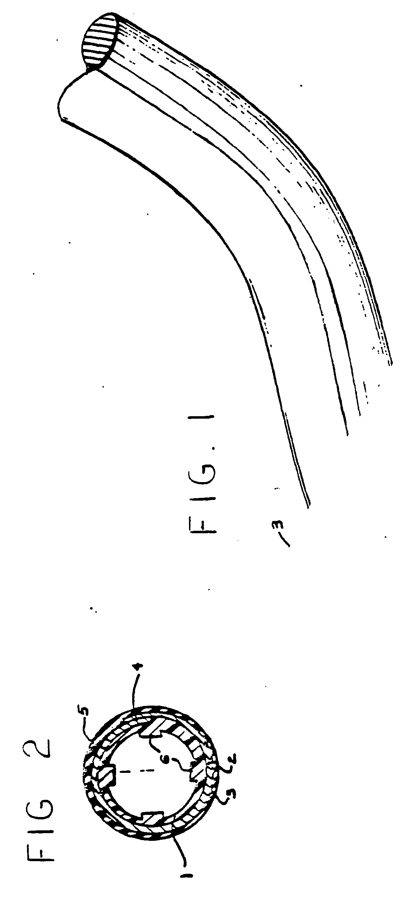

As shown in Fig. 2, the liner 1 may be provided with longitudinally extending ribs 6 for enhancing the rigidity and anti-buckling of the liner 1. The ribs 6 may extend longitudinally parallel to the axis of the liner or they may follow a helical path along the inner surface of the liner. Although four ribs are shown, a greater or lesser number of ribs may be used depending on the characteristics desired in the liner.

The tube is formed by continuously wrapping the adhesive coated aluminum strip around the extruded liner. The liner may be supplied from rolls or extruded as part of the manufacturing procedure. The aluminum strip has two longitudinal margins which overlap to form a longitudinally extending lap joint. The plastic casing is then extruded around the aluminum tube which has the liner already disposed within it. The heat of the extrusion process causes the plastic to bond to the adhesive and the adhesive in the lap joint to bond producing a securely attached aluminum tube and plastic jacket with a nylon liner disposed therein.

## Claims

1. A bendable tubular article for transport of fuels such as gasoline, diesel fuel, methanol, ethanol, sour gas and the like comprising: a bendable metal strip-formed sleeve (2) extending throughout the length of the article and having an adhesive layer (3) on the outer surface of said metal sleeve; and a flexible plastic jacket (5) encasing said metal sleeve and adhered thereto by said adhesive layer, characterized in that said article includes an innermost flexible, bendable tubular liner (1) made of petroleum resistant material, and that the bendable metal sleeve (2) has sufficient strength to dominate over resiliency of the plastic jacket (5) to form a bendable tubular composite article capable of maintaining a desired configuration, said metal sleeve (2) having sufficient heat dissipation capabilities to rapidly dissipate heat axially along the sleeve to prevent localized overheating of the article due to exposure to heat or sparks, and further characterized in that the flexible plastic jacket (5) provides improved kink resistance and the self-maintaining configuration characteristic of said composite is greater than the flexibility of said liner so that the article retains its shape after bending.

2. The article of claim 1 wherein the adhesive (3) is a copolymer of ethylene and a reactive carboxyl group, the liner (1) is of nylon, the metal sleeve (2) is aluminum and the jacket (5) is a flame retardant plastic material.

3. The article of claim 2 wherein the liner (1) has a thickness sufficient to contain petroleum fuel but less than about 0.5 mm, the metal sleeve (2) has a thickness of about 0.3 mm, and the flexible jacket (5) is an extruded plastics material to provide the optimum blend of bendability and kink resistance to the article.

4. The article of any one of claims 2 or 3 wherein the metal sleeve (2) includes two longitudinal margins which meet to form a longitudinal seam (4), and further wherein the sleeve has an adhesive layer on its inner and outer surfaces so as to adhere the sleeve to the liner and the jacket.

5. The article of any of the preceding claims wherein the liner further comprises rib means (6) for increased rigidity of the article.

6. The article of claim 5 wherein the rib means comprise a plurality of longitudinal ribs (6) and wherein the jacket is made of chlorinated polyethylene to impart additional flame retardance to the article.

7. The article of any of the preceding claims wherein the liner (1) is nylon, the sleeve (2) is aluminum and the jacket (5) is polyethylene or chlorinated polyethylene.

## Patentansprüche

1. Ein biegsamer, röhrenförmiger Gegenstand für den Transport von Brennstoffen, wie z.B. Benzin, Dieseltreibstoff, Methanol, Äthanol, Sauergas und ähnliches, bestehend aus einem biegsamen, bandförmigen Metallschlauch (2),

welcher sich durch die Länge des Gegenstandes zieht, mit einer Klebschicht (3) auf der Außenfläche von besagtem Metallschlauch, und einem flexiblen Kunststoffmantel (5), der den besagten Metallschlauch umhüllt und ihm durch die besagte Klebschicht anhaftet, dadurch gekennzeichnet, daß der besagte Gegenstand eine innere, flexible, biegsame, röhrenförmige Einlage (1) aus Petroleum-resistentem Material enthält, und daß der biegsame Metallschlauch (2) genügend Stärke zur Überwindung der Prallkraft des Kunststoffmantels (5) bei der Bildung eines aus mehreren Komponenten bestehenden, biegbaren, röhrenförmigen Gegenstandes aufweist, der zur Beibehaltung einer gewünschten Konfiguration geeignet ist, wobei besagter Metallschlauch (2) ausreichende hitzeableitende Fähigkeiten zur schnellen Ableitung der Hitze, axial entlang des Schlauches, aufweist, damit lokalisierte Überhitzung des Gegenstandes infolge von Hitze- oder Funkeneinwirkung vermieden wird, und auch dadurch gekennzeichnet, daß der flexible Kunststoffmantel (5) verbesserte knickabweisende Eigenschaften aufweist, und daß die für die besagten Komponenten charakteristische selbsterhaltende Konfiguration größer ist als die Flexibilität besagter Einlage, so daß der Gegenstand nach dem Biegen seine Form wieder erhält.

2. Der Gegenstand von Anspruch 1, wobei der Klebstoff (3) ein Copolymer aus Äthylen und einem reaktiven Karboxyl ist, die Einlage (1) aus Nylon, der Metallschlauch (2) aus Aluminium, und der Mantel (5) aus einem flammenretardierenden Kunststoff bestehen.

3. Der Gegenstand von Anspruch 2, wobei die Einlage (1) eine Stärke aufweist, die für die Aufnahme von Petroleum-Brennstoff ausreichend ist, jedoch weniger als 0,5 mm beträgt, der Metallschlauch (2) eine Stärke von ca. 0,3 mm aufweist, und der biegsame Mantel (5) aus einem gepressten Kunststoff besteht, der die optimale Zusammensetzung von Biegsamkeit und Knickwiderstand für den Gegenstand aufweist.

4. Der Gegenstand von einem der Ansprüche 2 oder 3, wobei der Metallschlauch (2) zwei längsverlaufende Ränder aufweist, die sich treffen und eine längsverlaufende Naht (4) bilden, und wobei der Schlauch an dessen inneren und äußeren Oberflächen eine Klebschicht aufweist, damit besagter Schlauch sowohl an der Einlage als auch an dem Mantel klebt.

5. Der Gegenstand einer der vorangehenden Ansprüche, wobei die Einlage zusätzlich Rippen (6) für eine höhere Steifheit des Gegenstandes enthält.

6. Der Gegenstand von Anspruch 5, wobei die Rippen aus einer Vielzahl von längs-verlaufenden Rippen (6) bestehen, und wobei der Mantel aus chloriertem Polyäthylen besteht, damit dem Gegenstand zusätzliche Flammenhemmung verliehen wird.

7. Der Gegenstand einer der vorangehenden Ansprüche, wobei die Einlage (1) aus Nylon, der Schlauch (2) aus Aluminium, und der Mantel (5) aus Polyäthylen oder chloriertem Polyäthylen bestehen.

**Revendications**

1. Article tubulaire pouvant être cintré pour transporter des carburants comme de l'essence, du mazout pour moteur diesel, du méthanol, de l'éthanol, du gaz acide et des matières semblables, l'article comprenant: un manchon (2) formé par une bande métallique pouvant être cintrée, cette bande s'étendant sur toute la longueur de l'article et comportant une couche (3) adhésive sur la surface extérieure dudit manchon métallique; et une chemise ou enveloppe extérieure (5) en matière plastique flexible entourant ledit manchon de métal et y étant collée par ladite couche adhésive, article caractérisé en ce que ledit article comprend une doublure, ou chemisage intérieur (1) tubulaire et pouvant être cintré, ce chemisage étant en une matière pouvant bien résister au pétrole, et en ce que le manchon (2) en métal cintrable possède une résistance mécanique suffisante pour surmonter la résilience de l'enveloppe (5) extérieure en matière plastique pour former un article composite tubulaire pouvant être cintré, capable de conserver une configuration voulue, ledit manchon (2) métallique ayant des possibilités suffisantes de dissipation de la chaleur pour dissiper rapidement de la chaleur, dans le sens axial le long du manchon, pour éviter une surchauffe localisée de l'article qui serait due à une exposition à de la chaleur ou à des étincelles, l'article étant caractérisé en outre en ce que l'enveloppe extérieure (5) en matière plastique flexible confère une meilleure résistance à la formation de plis très anguleux et en ce que la caractéristique de configuration en auto-maintien dudit composite est supérieure à la flexibilité de ladite chemise intérieure, de sorte que l'article conserve sa forme après cintrage ou pliage.

2. Article selon la revendication 1, dans lequel l'adhésif (3) est un copolymère d'éthylène et d'un groupe carboxyle réactif, le chemisage intérieur (1) est en du "Nylon", le manchon (2) métallique est en aluminium et l'enveloppe extérieure (5) est en une matière plastique pouvant retarder la propagation d'une flamme.

3. Article selon la revendication 2, dans lequel le chemisage intérieur (1) a une épaisseur suffisante pour contenir du carburant pétrolier mais inférieure à 0,5 mm environ, le manchon (2) métallique a une épaisseur d'environ 0,3 mm et l'enveloppe extérieure (5) flexible est en une matière plastique extrudée de façon à conférer à l'article l'association optimale d'une aptitude au cintrage et d'une résistance à la formation de plis très anguleux.

4. Article selon l'une des revendications 2 ou 3, dans lequel le manchon (2) métallique comprend deux marges longitudinales qui se rejoignent pour former une soudure (4) longitudinale, et dans lequel le manchon comporte sur ses surfaces intérieure et extérieure une couche adhésive de manière à faire adhérer le manchon au chemisage intérieur et à la chemise ou enveloppe extérieure.

5. Article selon l'une quelconque des revendications précédentes, dans lequel le chemisage intérieur comprend en outre un dispositif (6) de type nervures pour augmenter la rigidité de l'article.

6. Article selon la revendication 5, dans lequel le dispositif de type nervures comprend plusieurs nervures (6) longitudinales, et dans lequel l'enveloppe extérieure est en du polyéthylène chloré pour conférer à l'article une caractéristique supplémentaire de retard de la propagation d'une flamme.

7. Article selon l'une quelconque des revendications précédentes, dans lequel le chemisage intérieur (1) est en "Nylon", le manchon (2) est en aluminium et l'enveloppe extérieure (5) est en polyéthylène ou en polyéthylène chloré.

FIG 2

FIG. 1

EP 0 230 457 B1